# FASCICULE DE BREVET EUROPEEN

(11) **EP 0 406 105 B1**
(45) Date de publication et mention de la délivrance du brevet: **13.04.1994**
(21) Numéro de dépôt: 90401837.1
(22) Date de dépôt: 27.06.1990
(51) Int. Cl.: C02F 1/38, D21C 5/02

(54) **Procédé pour le traitement des effluents contenant des encres à l'eau**
Verfahren zur Behandlung von wasserlösliche Tinte enthaltendem Abwasser
Method for treating waste water containing water-soluble ink

(30) Priorité: 29.06.1989 FR 8908673
(43) Date de publication de la demande: 02.01.1991
(73) Titulaire: LA CELLULOSE DU PIN, F-33200 Bordeaux (FR)
(72) Inventeur: Chave, Etienne, F-33400 Talence (FR); Langlade, Pierre, F-33200 Bordeaux (FR); Pommier, Jean-Claude, F-33170 Gradignan (FR)
(74) Mandataire: Muller, René

(56) Documents cités:
- DE-A- 1 101 301
- US-A- 4 076 578
- DATABASE WPIL, no. 83-41189K, Derwent Publications Ltd, Londres, GB;& SU-A-937 342 (MOSC MOSVODOKANALNI) 23-06-1982
- PATENT ABSTRACTS OF JAPAN, vol. 7, no. 175 (C-179), 3 mars 1983;& JP-A-58 081 409 (MITSUBISHI JUKOGYO K.K.) 16-05-1983
- PATENT ABSTRACTS OF JAPAN, vol. 8, no. 156 (C-234)[1953], 19 juillet 1984;& JP-A-59 059 257 (MITSUBISHI JUKOGYO K.K.) 05-04-1984
- TAPPI, vol. 63, no. 9, septembre 1980, pages 113-116; L. PFALZER: "Deinking ofsecondary fibers"
- Lexikon der Verfahrenstechnik Band 16, Seiten 590-595
- ULLMANNS Enzyklopädie der technischen Chemie, Band 2, Seiten 210,211,213-215,217-218

## Description

L'invention concerne le traitement des effluents contenant des encres, en particulier des encres à l'eau utilisées dans les procédés d'impression dans les imprimeries, et dans d'autres industries telles les papeteries, cartonneries, sacheries par exemple.

Dans les industries de transformation des papiers ou cartons telles les cartonneries, sacheries, les effluents à traiter peuvent contenir différents agents de pollution, en particulier des encres à l'eau, notamment lorsque le site industriel utilise un procédé d'impression par flexographie. Ils peuvent aussi contenir des résidus de colle, par exemple à base d'amidon.

Pour traiter ces effluents, plusieurs procédés ont déjà été proposés.Ils consistent généralement à séparer par différentes méthodes les agents de pollution de l'eau qui les contient, afin d'obtenir d'un côté des boues polluantes et de l'autre côté l'effluent clarifié, puis à éliminer les boues polluantes obtenues, généralement par incinération.

On a ainsi proposé un procédé de séparation par floculation suivie d'une décantation statique des effluents. Mais les boues obtenues par la mise en oeuvre de ce procédé sont peu denses, de sorte que le volume qui est à détruire est important, et le coût de l'incinération est élevé.

Pour obtenir des boues plus compactes, on a alors proposé d'utiliser un filtre-presse qui permet de passer d'une siccité de 2 à 3 % à une siccité de 30 % environ. Un des inconvénients du filtre-presse est que son débit est variable en étant lié au colmatage des toiles qui peut se produire rapidement. Ce dispositif nécessite en outre un personnel de main d'oeuvre pour le surveiller, en particulier au moment du démoulage du gâteau obtenu.

On a encore proposé un procédé de séparation par ultra-filtration. Mais c'est un procédé onéreux et pour lequel se pose également des problèmes de colmatage de membranes, qui peuvent être irréversibles lorsqu'il s'agit de produits tels des hydrocarbures, des huiles, des colles spéciales.

On connait d'après la publication DATABASE WPIL, n° 83-41189 K, SU-A-937 342 un procédé de clarification d'eau contenant des particules de peinture finement dispersées, ce procédé utilise une floculation suivie d'une centrifugation à une vitesse de 2000 tours/mn.

Ce document ne concerne pas le traitement d'effluents contenant des encres à l'eau.

On connait encore d'après le publication Patent Abstracts of Japan, vol. 7 n° 175 (C-179), 3 Mars 1983 et JP-A-58 081 409, un procédé de récupération de pigment ou de solvant à partir de déchets d'encre. Ce document ne concerne pas un traitement de clarification d'effluents aqueux contenant des encres à l'eau.

L'invention propose un procédé de traitement des effluents qui permet de séparer les encres de l'eau qui les contient et d'obtenir d'un côté un effluent clarifié et en même temps d'un autre côté des boues particulièrement compactes.

Selon l'invention, on traite en continu l'effluent aqueux à l'aide d'un agent de floculation en milieu acide et on soumet ensuite l'effluent à une centrifugation en continu, consistant en une accélération comprise entre 1000 et 20 000 g et de préférence entre 1000 et 11 000 g, tout en évitant l'interface air-liquide au cours de la centrifugation.

Par centrifugation en continu on entend selon l'invention une centrifugation dans laquelle l'alimentation en effluent d'une part, et le rejet de l'effluent clarifié d'autre part, sont continus, au moins entre deux débourbages.

En évitant l'interface air-liquide au cours de la centrifugation, on supprime tout risque de formation d'une mousse due à la présence de l'air à la surface de l'effluent. La formation d'une mousse peut réduire fortement l'efficacité de la séparation des encres de l'eau.

Sous un des aspects de l'invention, on effectue la floculation en milieu acide, notamment à un pH compris entre 2 et 6, en utilisant un agent de floculation choisi parmi les floculants minéraux tels le sulfate d'alumine, des polymères du sulfate d'alumine, le chlorure ferrique, les floculants organiques tels les polymères ioniques ou non ioniques.

De préférence, on effectue la floculation à un pH de l'ordre de 5, par addition d'un acide tel l'acide sulfurique, et on utilise en tant qu'agent floculant au moins un agent choisi parmi les polymères cationiques tels des polyéthylèneimines modifiés ou non, et des sulfates d'alumine.

Afin d'améliorer encore l'efficacité de la floculation, celle-ci peut être effectuée avantageusement dans certains cas sous une agitation adéquate.

La quantité d'agent floculant peut varier selon le type d'agent et le type d'effluent à traiter. On choisit généralement un taux de 0,1 à 2 % en poids d'agent floculant par rapport au poids des matières sèches de l'effluent.

L'étape de floculation peut être très courte et de l'ordre de quelques secondes seulement.

Afin d'améliorer la centrifugation qui va suivre, on ajoute avantageusement à l'effluent, notamment au cours de la floculation, un produit anti-mousse. Un produit anti-mousse convenable est par exemple une huile de silicone.

Selon une caractéristique avantageuse de l'invention, on ajoute aussi à l'effluent une colle à base d'amidon lorsque l'effluent à traiter n'en contient pas ou qu'il n'en contient que très peu. Des essais selon l'invention ont montré que la présence d'une colle à base d'amidon dans l'effluent, augmentait encore la siccité des boues obtenues par centrifugation. A titre d'exemple, un effluent contenant de l'ordre de 1 g/litre d'une colle à base d'amidon avant la centrifugation, peut après centrifugation être réduit à un volume de boues d'environ 5 à 6 % du volume total de l'effluent, le reste étant l'effluent clarifié, alors qu'un effluent du même type mais sans amidon ne peut être réduit après centrifugation qu'à un volume de boue d'environ 10 % seulement.

Il semble que l'amidon opère un compactage des encres qui se présentent sous forme de flocs après la floculation. Ce phénomène est lié au procédé selon l'invention qui utilise une alimentation continue en effluents de la centrifugeuse.

La quantité de colle à base d'amidon que l'on ajoute avantageusement à l'effluent correspond à l'obtention d'un taux de colle à base d'amidon exprimé en matières sèches dans l'effluent compris environ entre 0,1 kg et 10 kg par m³ d'effluent et de préférence entre 0,1 kg et 2 kg par m³.

L'invention concerne également un dispositif ou installation pour le traitement des effluents contenant des encres à l'eau. Le dispositif comprend notamment et en combinaison des moyens pour mélanger l'agent floculant, et le cas échéant les autres additifs, avec l'effluent, et une centrifugeuse industrielle du type à assiettes, disposée en aval desdits moyens pour mélanger, et qui fonctionne à bol plein, pour séparer les boues contenant les encres de l'effluent clarifié. Un fonctionnement à bol plein signifie selon l'invention qu'au cours de la centrifugation, le bol est plein d'effluents à séparer, et donc sans interface air-liquide.

Dans ce type de centrifugeuse l'effluent clarifié est séparé en continu.

Les boues contenant les encres sont éjectées du bol en rotation soit en continu par des buses, soit, à intervalles périodiques par ouverture du bol.

Selon une réalisation du dispositif, les moyens pour mélanger comprennent une cuve ou bac de réaction dans lequel s'effectue la floculation. Le bac de réaction peut le cas échéant être équipé d'un agitateur.

Dans une variante, les moyens pour mélanger l'agent floculant, et le cas échéant les autres additifs, avec l'effluent sont essentiellement la conduite d'alimentation de la centrifugeuse, l'introduction de l'agent floculant et des autres additifs s'effectuant directement dans cette canalisation qui agit alors en tant que mélangeur statique.

Dans une autre variante, le mélange de l'effluent avec l'agent floculant et la floculation peuvent s'effectuer à la fois dans la conduite d'alimentation et dans un bac de réaction en amont de la centrifugeuse.

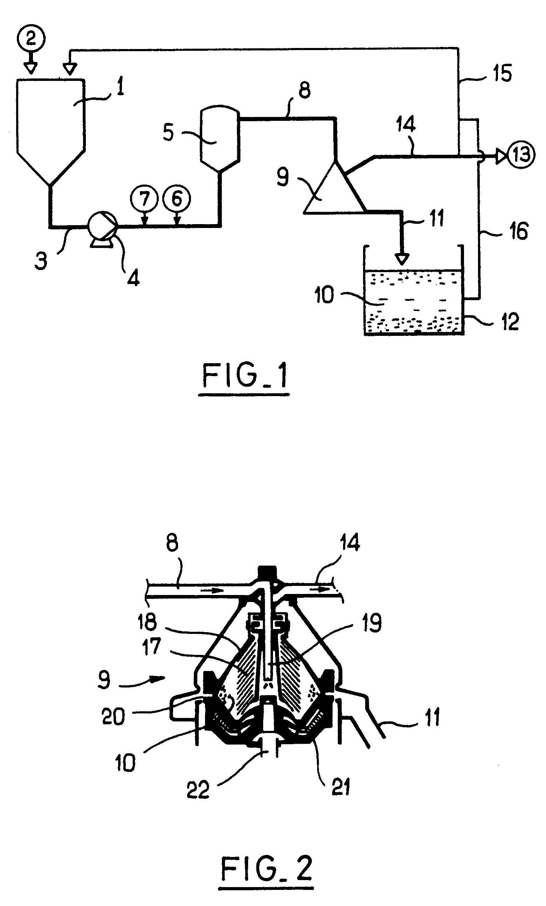

La figure 1 représente schématiquement un exemple d'une installation de traitement selon l'invention.

Sur cette figure 1, une cuve 1 permet de stocker les effluents à traiter 2, par exemple des eaux flexographiques. Un conduit 3 comprenant une pompe d'alimentation 4 est prévu entre la cuve de stockage 1 et un bac de réaction 5 dans lequel s'effectue la floculation après injection ou ajout d'un agent floculant 6 dans le conduit 3, en amont du bac de réaction.

Des injections ou ajouts d'autres produits 7 ou additifs peuvent être prévus dans le bac de réaction ou avantageusement dans le conduit d'alimentation 3 en amont de ce bac de réaction. En particulier, on peut prévoir l'injection d'un acide afin de porter l'effluent au pH désiré. On peut aussi ajouter notamment un agent anti-mousse et/ou une colle à base d'amidon.

A la sortie du bac de réaction 5, l'effluent contenant les flocs est amené par le conduit 8 au clarificateur centrifuge 9 ou centrifugeuse qui sépare les boues 10 contenant les encres évacuées par le conduit 11 dans la cuve à boues 12, des effluents clarifiés 13 évacués par le conduit 14.

L'installation selon l'exemple comprend en outre un conduit 15 permettant le retour des effluents en sortie de centrifugeuse vers la cuve de stockage 1 en cas d'incident de fonctionnement de l'installation.

Un autre conduit 16 peut être prévu entre le bac à boues et la cuve de stockage, ce conduit 16 prenant naissance au niveau désiré sur le bac à boues. En effet, il est nécessaire de prévoir des ouvertures périodiques du bol de la centrifugeuse pour l'évacuation des boues. C'est évidemment vrai pour une centrifugeuse qui fonctionne par ouvertures d'orifices circulaires à intervalles périodiques pour l'évacuation des boues, mais aussi pour une centrifugeuse à buses qui bien qu'évacuant les boues en continu nécessite également périodiquement des ouvertures de son bol. A chaque ouverture du bol de la centrifugeuse, le liquide contenu dans le bol est éjecté en même temps que les boues dans la cuve à boues et, finalement, il est possible que le bac à boues contienne à un niveau intermédiaire entre le niveau supérieur contenant les flocs aérés et le niveau inférieur contenant les matières décantées, une phase moins chargée en matières sèches qui peut alors avantageusement être recyclée et retraitée.

Un circuit annexe de nettoyage non représenté peut compléter l'installation.

La figure 2 représente schématiquement une centrifugeuse 9 à assiettes pouvant être utilisée dans l'installation schématisée sur la figure 1. Une centrifugeuse convenable est par exemple un séparateur à éjection périodique désigné encore sous l'appellation "séparateur à bol autodébourbeur". Dans ce type de séparateur 9 à assiettes 17, le bol tournant 18 présente une forme biconique. Dans le plan de jonction des cônes se trouvent soit des buses, soit des orifices circulaires qui peuvent être ouverts ou fermés. Quand ces orifices circulaires sont fermées, la boue ou les solides 10 s'accumulent dans l'espace ménagé entre le bol 18 et les assiettes 17. Quand ils s'ouvrent, les solides sont éjectés à l'extérieur. Ce type de séparateur est commercialisé, par exemple, par la société WESTFALIA SEPARATOR. L'alimentation en effluents 8 contenant les flocs est continue et s'effectue au centre du bol par le conduit 19. Les boues 10 s'accumulent au fur et à mesure à proximité de l'orifice circulaire 20 et l'effluent clarifié 13 est rejeté par le conduit de sortie 14. Lorsqu'on ouvre le bol, par l'action du piston 21, les boues 10 sont éjectées et sont évacuées par la canalisation 11. L'entrainement du bol tournant à grande vitesse s'effectue par l'arbre 22. L'ouverture et la fermeture du bol peut être manuelle ou provoquée à intervalle de temps régulier ou commandée par le séparateur lui-même lorsque les boues atteignent un certain volume.

L'invention s'applique au traitement de différents effluents et en particulier à des effluents des types suivants : eau de lavage contenant des encres pour des impressions en flexographie, eau de lavage d'impression en flexographie contenant de la colle à base d'amidon.

Lorsque l'effluent à traiter contient d'autres agents de pollution, en particulier des produits non miscibles à l'eau tels des huiles, il peut être avantageux avant d'opérer selon le procédé de l'invention, d'effectuer d'autres traitements de séparation sur l'effluent, par exemple d'effectuer une séparation de l'huile par florentin.

D'autres caractéristiques et avantages de l'invention apparaîtront dans les exemples suivants.

### EXEMPLE 1 :

On traite un effluent contenant des encres pour impression en flexographie par la mise en oeuvre de l'installation schématisée sur la figure 1. Cet effluent présente avant traitement une teneur en matières sèches de 27 g/l.

Dans le conduit 3, on injecte de l'acide sulfurique afin d'acidifier l'effluent à pH = 5,0, puis on injecte un agent floculant, à savoir une polyéthylèneimine, à raison de 1,3 kg d'une solution commerciale à 25 % de matières sèches par m³. On ajoute également dans le conduit 3 une huile de silicone en tant que produit anti-mousse, à raison de 125 g de solution commerciale par m³. Après un passage dans le bac de réaction 5 qui dure environ de 10 à 20 secondes, on envoie l'effluent dans la centrifugeuse 9 fonctionnant en continu, par exemple le dispositif commercialisé par la société WESTFALIA SEPARATOR sous l'appellation "clarificateur SA 20".

L'effluent est soumis dans ce clarificateur à une accélération maximale de 7000 g, et le débit de l'effluent est de 0,75 m³/h.

On obtient à la sortie du clarificateur, d'un côté l'effluent clarifié, évacué par le conduit 14, et de l'autre côté les boues contenant les encres, évacuées par le conduit 11 dans la cuve à boues 12.

Les boues obtenues dans le bac à boues sont à 90 g/l et leur volume correspond environ à 25 % du volume de l'effluent initial.

Les boues peuvent être incinérées.

### EXEMPLE 2 :

On traite un effluent contenant des encres solubles à l'eau pour impression en flexographie. Cet effluent présente avant traitement une teneur en matières sèches de 8,7 g/l. On opère comme dans l'exemple 1, pour tous les traitements préalables en ajustant les quantités au taux de matières sèches de l'effluent. On soumet l'effluent à une centrifugation, le débit de l'effluent dans la centrifugeuse étant réglé à 2 m³/h.

On obtient des boues à une teneur en matières sèches de l'ordre de 90 g/l. Le volume des boues correspond à 9 % environ du volume de l'effluent initial.

### EXEMPLE 3 :

On traite l'effluent de l'exemple 2 en ajoutant en outre dans le conduit 3, en amont du bac de réaction 5, une colle à base d'amidon à raison de 1 kg de matières sèches par m³ d'effluent. On soumet ensuite l'effluent à une centrifugation comme dans l'exemple 2.

On obtient des boues à une teneur en matières sèches de l'ordre de 220 g/l dont le volume correspond à 4 % du volume de l'effluent initial. Par rapport à l'exemple 2, on remarque que l'addition d'amidon améliore fortement le procédé de compactage des boues par centrifugation.

## Revendications

1. Procédé pour le traitement des effluents aqueux contenant des encres à l'eau, par séparation, en vue d'obtenir d'un côté des boues contenant les encres et de l'autre côté l'effluent clarifié, caractérisé en ce qu'on effectue, en continu, une floculation en milieu acide de l'effluent par action d'un agent floculant, suivie d'une centrifugation de l'effluent en continu consistant en une accélération comprise entre 1 000 et 20 000 g tout en évitant un interface air-liquide au cours de la centrifugation.

2. Procédé selon la revendication 1, caractérisé en ce qu'on effectue la floculation en portant l'effluent à pH de 5 environ par addition d'un acide et en ce qu'on utilise en tant qu'agent floculant un polymère cationique choisi parmi les polyéthylèneimines modifiées ou non modifiées.

3. Procédé selon une des revendications 1 à 2, caractérisé en ce que la floculation s'effectue sous agitation.

4. Procédé selon une des revendications 1 à 3, caractérisé en ce qu'on ajoute un agent anti-mousse à l'effluent avant la centrifugation.

5. Procédé selon une des revendications 1 à 4, caractérisé en ce qu'on ajoute une colle à base d'amidon à l'effluent avant la centrifugation lorsque celui-ci n'en contient pas ou très peu.

6. Procédé selon une des revendications 1 à 5, caractérisé en ce que la colle d'amidon est ajoutée pour obtenir un taux de colle à base d'amidon exprimé en matières sèches dans l'effluent compris entre 0,1 kg et 10 kg par m³ d'effluent et de préférence entre 0,1 kg et 2 kg par m³.

7. Procédé selon une des revendications 1 à 6, caractérisé en ce que la centrifugation consiste en une accélération comprise entre 1000 et 11000 g.

8. Procédé selon une des revendications 1 à 7, caractérisé en ce qu'il utilise des moyens pour mélanger en continu l'agent floculant avec l'effluent, ces moyens étant disposés juste en amont d'une centrifugeuse industrielle à assiettes fonctionnant à bol plein et en continu en séparant d'un côté les boues contenant les encres et de l'autre côté l'effluent clarifié.

9. Procédé selon la revendication 8, caractérisé en ce que la centrifugeuse à assiettes est un séparateur à bol autodébourbeur par ouverture périodique ou par échappement continu des boues.

10. Procédé selon une des revendications 8 ou 9, caractérisé en ce que les moyens pour mélanger l'agent floculant avec l'effluent comprennent une cuve ou bac de floculation.

11. Procédé selon une des revendications 8 ou 9, caractérisé en ce que les moyens pour mélanger l'agent floculant avec l'effluent sont formés essentiellement de la conduit d'alimentation en effluent de la centrifugation à assiettes, l'agent floculant étant introduit directement dans cette canalisation qui agit en tant que mélangeur statique.

12. Procédé selon une des revendications 8 à 11, caractérisé en ce qu'il utilise un circuit de recyclage pour les phases boueuses non chargées en matières sèches, saisies en aval de la centrifugeuse.

13. Procédé selon une des revendications 8 à 12, caractérisé en ce qu'il utilise un circuit de recyclage en cas d'incident de fonctionnement.

14. Procédé selon une des revendications 1 à 7, caractérisé en ce qu'il s'applique au traitement des effluents contenant des encres à l'eau, des papeteries, cartonneries, sacheries.

## Claims

1. Process for treating aqueous effluents containing water inks, by separation, for the purpose of obtaining, on the one hand, sludges containing the inks and, on the other hand, the clarified effluent, characterized in that a flocculation is continuously carried out in acid medium of the effluent by action of a flocculating agent, followed by a continuous centrifuging of the effluent, consisting of an acceleration of between 1,000 and 20,000 g while avoiding an air-liquid interface during the centrifuging.

2. Process according to Claim 1, characterized in that the flocculation is carried out by bringing the effluent to a pH of approximately 5 by the addition of an acid, and in that as flocculating agent there is used a cationic polymer chosen from among the modified or non-modified polyethylene imines.

3. Process according to one of Claims 1 to 2, characterized in that the flocculation is carried out with stirring.

4. Process according to one of Claims 1 to 3, characterized in that an anti-foaming agent is added to the effluent before centrifuging.

5. Process according to one of Claims 1 to 4, characterized in that a starch-based adhesive is added to the effluent before centrifuging if the effluent contains no or very little starch.

6. Process according to one of Claims 1 to 5, characterized in that the starch adhesive is added for the purpose of obtaining a proportion of starch-based adhesive, expressed as dry matter in the effluent, of between 0.1 kg and 10 kg per m³ of effluent and preferably between 0.1 kg and 2 kg per m³.

7. Process according to one of Claims 1 to 6, characterized in that the centrifuging consists of an acceleration of between 1,000 and 11,000 g.

8. Process according to one of Claims 1 to 7, characterized in that means are used for continuously mixing the flocculating agent with the effluent, these means being disposed just upstream of a plate-type industrial centrifuge operating continuously with full bowl and separating, on the one hand, the sludges containing the inks and, on the other hand, the clarified effluent.

9. Process according to Claim 8, characterized in that the plate-type centrifuge is a separator with self-sluicing bowl by periodic opening or by continuous discharge of the sludges.

10. Process according to one of Claims 8 or 9, characterized in that the means for mixing the flocculating agent with the effluent comprise a flocculation tank or vat.

11. Process according to one of Claims 8 or 9, characterized in that the means for mixing the flocculating agent with the effluent are formed basically of the effluent supply pipe to the plate centrifuging, the flocculating agent being introduced directly into this duct, which acts as static mixer.

12. Process according to one of Claims 8 to 11, characterized in that it uses a recycling circuit for the sludge phases not charged with dry matter, tapped downstream of the centrifuge.

13. Process according to one of Claims 8 to 12, characterized in that it uses a recycling circuit in the case of an operating incident.

14. Process according to one of Claims 1 to 7, characterized in that it is applicable to the treatment of effluents containing water inks, and from paper-making, cardboard-making and bag-making processes.

## Patentansprüche

1. Verfahren zur Behandlung von wasserverdünnbare Farben enthaltenden wäßrigen Abprodukten durch Abtrennung, um einerseits die Farben enthaltende Schlämme und andererseits das geklärte Abwasser zu erhalten, **dadurch gekennzeichnet,** daß man das Abwasser kontinuierlich im sauren Medium durch Einwirkung eines Flockungsmittels einem Ausflockungsvorgang unterwirft und anschließend eine kontinuierliche Zentrifugierung des Abwassers durchführt, die in einer Beschleunigung auf 1000 bis 20000 g besteht, wobei während dieser Zentrifugierung eine Luft-Flüssigkeit-Grenzfläche vermieden wird.

2. Verfahren nach Anspruch 1, **dadurch gekennzeichnet,** daß man den Ausflockungsvorgang durchführt, indem das Abwasser durch Zugabe einer Säure auf einen pH-Wert von etwa 5 gebracht wird und daß als Flockungsmittel ein kationisches Polymeres verwendet wird, das aus den gegebenenfalls modifizierten Polyethyleniminen ausgewählt ist.

3. Verfahren nach Anspruch 1 oder 2, **dadurch gekennzeichnet,** daß der Ausflockungsvorgang unter Rühren vor sich geht.

4. Verfahren nach einem der Ansprüche 1 bis 3, **dadurch** **gekenn****zeichnet,** daß vor der Zentrifugierung ein Antischaummittel zum Abwasser gegeben wird.

5. Verfahren nach einem der Ansprüche 1 bis 4, **dadurch** **gekenn****zeichnet,** daß vor der Zentrifugierung ein Klebstoff auf Stärkegrundlage zum Abwasser gegeben wird, wenn es davon nichts oder nur sehr wenig enthält.

6. Verfahren nach einem der Ansprüche 1 bis 5, **dadurch gekenn****zeichnet,** daß der Stärkeklebstoff zugegeben wird, um einen Anteil des Klebstoffs auf Stärkegrundlage, ausgedrückt als Feststoff im Abwasser, von 0,1 bis 10 und vorzugsweise von 0,1 bis 2 kg/m³ Abwasser zu erhalten.

7. Verfahren nach einem der Ansprüche 1 bis 6, **dadurch gekenn****zeichnet,** daß die Zentrifugierung in einer Beschleunigung auf 1000 bis 11000 g besteht.

8. Verfahren nach einem der Ansprüche 1 bis 7, **dadurch gekenn****zeichnet,** daß Mittel zum kontinuierlichen Mischen des Flokkungsmittels mit dem Abwasser verwendet werden, wobei diese Mittel unmittelbar vor einer technischen Tellerzentrifuge angeordnet sind, die mit Vollmantel und kontinuierlich betrieben wird, um einerseits die die Farben enthaltenden Schlämme und andererseits das geklärte Abwasser abzutrennen.

9. Verfahren nach Anspruch 8, **dadurch gekennzeichnet,** daß die Tellerzentrifuge ein Separator mit Selbstentschlammung der Schleudertrommel durch periodisches Öffnen oder kontinuierliche Abgabe der Schlämme ist.

10. Verfahren nach Anspruch 8 oder 9, **dadurch gekennzeichnet,** daß die Mittel zum Mischen des Flockungsmittels mit dem Abwasser eine Ausflockungswanne oder einen -behälter umfassen.

11. Verfahren nach Anspruch 8 oder 9, **dadurch gekennzeichnet,** daß die Mittel zum Mischen des Flockungsmittels mit dem Abwasser im wesentlichen aus der Abwasser-Versorgungsleitung der Tellerzentrifuge bestehen, wobei das Flockungsmittel direkt in diese Rohrleitung eingeleitet wird, die als statischer Mischer wirkt.

12. Verfahren nach einem der Ansprüche 8 bis 11, **dadurch** **gekennzeichnet**, daß für die nicht mit Feststoff beladenen Schlammphasen, die nach der Zentrifuge abgezogen werden, eine Rückführungsleitung verwendet wird.

13. Verfahren nach einem der Ansprüche 8 bis 12, **dadurch** **gekennzeichnet**, daß bei einer Betriebsstörung eine Rückführungsleitung verwendet wird.

14. Verfahren nach einem der Ansprüche 1 bis 7, **dadurch** **gekennzeichnet,** daß es bei der Behandlung von wasserverdünnbare Farben enthaltenden Abwässern der Papierindustrie, der Kartonagenindustrie und der Verpackungstaschen herstellenden Industrie verwendet wird.
